# EUROPEAN PATENT SPECIFICATION

(11) **EP 3 593 930 B1**
(45) Date of publication and mention of the grant of the patent: **03.03.2021**
(21) Application number: 19182877.1
(22) Date of filing: 27.06.2019
(51) Int. Cl.: B23D 77/02

(54) **MACHINE REAMER WITH CUTTING EDGES FROM PROGRESSIVE CUTTING MATERIALS**
MASCHINENREIBAHLE MIT SCHNEIDKANTEN AUS PROGRESSIVEN SCHNEIDMATERIALIEN
ALÉSOIR DE MACHINE DOTÉ DE BORDS DE COUPE À PARTIR DE MATÉRIAUX DE COUPE PROGRESSIVE

(30) Priority: 12.07.2018 CZ 20180353
(43) Date of publication of application: 15.01.2020
(73) Proprietor: FINAL Tools a.s., 627 00 Brno (CZ)
(72) Inventor: Fiala, Stanislav, 62800 Brno (CZ)
(74) Representative: Malusek, Jiri

(56) References cited:
- CH-A- 321 980
- CH-A- 322 363
- CH-A- 433 916
- US-A- 3 053 118

## Description

### Technical background

The invention concerns machine reamers according to the preamble of claim 1.

### State of the art

At present machine reamers with cutting edges from progressive material are known, above all from cermet, polycrystalic diamond (further only PKD) or cubic bor nitride (further only CBN), which are used for high-speed finish machining of very precise cylindrical openings on CNC machining tools. The main advantage of such reamers is, that a very high machining speed can be achieved at high dimension and shape precision of the machined surfaces and at high durability of cutting edges. Reamers with cermet cutting edges are usually made from monolitic cermet bars as a compact monolitic tool or they are made of a cylindrical body from construction heat treated steel or sintered carbide, and on one end there is a cutting portion with cutting plates from progressive cutting materials soldered on. Another known solution is, that on the cylindrical body from constructional heat treated steel or of sintered carbide, cermet cylindrical monobloc is sintered on, in which tooth' grooves with cutting edges are made.

For a good function of the high-speed reamers it is important to ensure sufficient cooling of the cutting edges. From that reason, by reamers, which are designated for machining of cut-off openings there is a central channel provided in the shank of the reamer and the cooling liquid is discharged in the face of cutting portion of the reamer.

By reamers designated for machining of through openings there is a central channel provided in the shank of the reamer and the cooling liquid is led to radial channels and is discharched into the tooth's grooves in the area of cutting portion of the reamer.

The main disadvantage of the known machine reamers with cutting edges from cermet, PKD and CBN is the high price, because there are high production costs. From above reasons are such reamers used above all only in the large series productions, where the price of the reamer is economical with regards to the high performance.

Although by use of reamers with cutting edges of cermet, PKD and CBN also other technical advantages can be achieved in a comparison with commertial machine reamers, in many cases it is not possible from mentioned economical reasons to apply them in piece or small series production.

One of the main reasons for high production costs of the known reamers with edges from cermet, PKD and CBN is the high price of blanks from progressive cutting materials, which has to be subsequently machined. Above all monolitic tools with cutting edges of cermet are produced from blanks of monolitic cermet bars, which are offered from producers in only limited dimension sortiment. Subsequent machining is also very laborious. Especially uneasy and costly is to create cooling channels with electro-erosive method in cutting material. By that process inner cracks occur, which may lead to destruction of the tool even by the production and so the production costs may be enhanced. Another costly production operation is joining of cermet, PKD or CBN parts to the steel body of the reamer with hard soldering. Due to the different elongation characteristics of the soldered materials inner tensions in the joits occur, which have to be reduced by subsequent heat treatment, which is time wasting and can not ensure fully eliminating of the tensions in the joint.

From the document US 3,759,625 a reamer is known which is provided with a centering arbor, on which a shell with various cutting and guide edges is put on. Centering arbor has along its circumference spaced pads or seats, which register radially with also spaced tapered splines which are on the inner surface of the opening of the shell. Each seat has a radially otwardly extending shoulder, the face of which is sitting on the end face of the spline and so the shell with cutting edges is brought into rotation. The first edge is machining the second is only guiding to prevent undesired vibration. Such construction is complicated for production, the touching places are far away from each other and so the centering arbor has relatively large diameter and on the contrary the shell with cutting edges has relatively thin wall. Shaping elements, seats and splines has to be made very precise, because they come into contact by rotating movement which makes the production costly.

The aim of the invention is to present a machine reamer with cutting edges from progressive materials of a new type, which enables to reduce production costs at least of 50 % and so to achieve lower prices of machine reamers with cutting edges of cermet, PKD and CBN and so to enable economical use of such tools also for piece production and simultaneously to simplify the assembly.

### Substance of the invention

The above mentioned disadvantages are eliminated with machine reamer with cutting edges from progressive cutting materials according to the invention defined in claim 1, which is characterised by the fact that the shape profiles of the centering pin and of the opening in the cutting ring are created as longitudinal grooves parallel with the axe of the machine reamer with a peak angle of 90 °-120° and with a depth of 0,3 - 0,5 mm and the shape profile of the opening in the cutting ring is arranged on the shape profile of the centering pin with a radial clearance of 0,05 - 0,1 mm for fulfilling with an adhesive material and for achievement of a non-taking apart joint of the cutting ring with the supporting portion of the shank of the machine reamer after its hardening.

In a preferred embodiment the cutting ring is made as a monobloc from cermet.

In another preferred embodiment the cutting ring is made as a monobloc from sintered carbide.

In the other preferred embodiment the cutting ring is made as a monobloc from cutting ceramics.

In another preferred embodiment the cutting ring is made as a monolit from sinterd carbide, in which tooth's protrusions with cutting edges made from the group of materials as polycrystalic diamond, cubic bor nitrid or cermet.

In the other preferred embodiment the supprting portion of the shank is made of constructional heat treated steel.

In another preferred embodiment the supporting portion of the shank is made of sintered carbide.

In another preferred embodiment between between a front shoulder of the cutting ring and a front shoulder on the supporting portion of the shank of the machine reamer a distance ring is free arranged on the centering pin.

### Brief description of the drawings

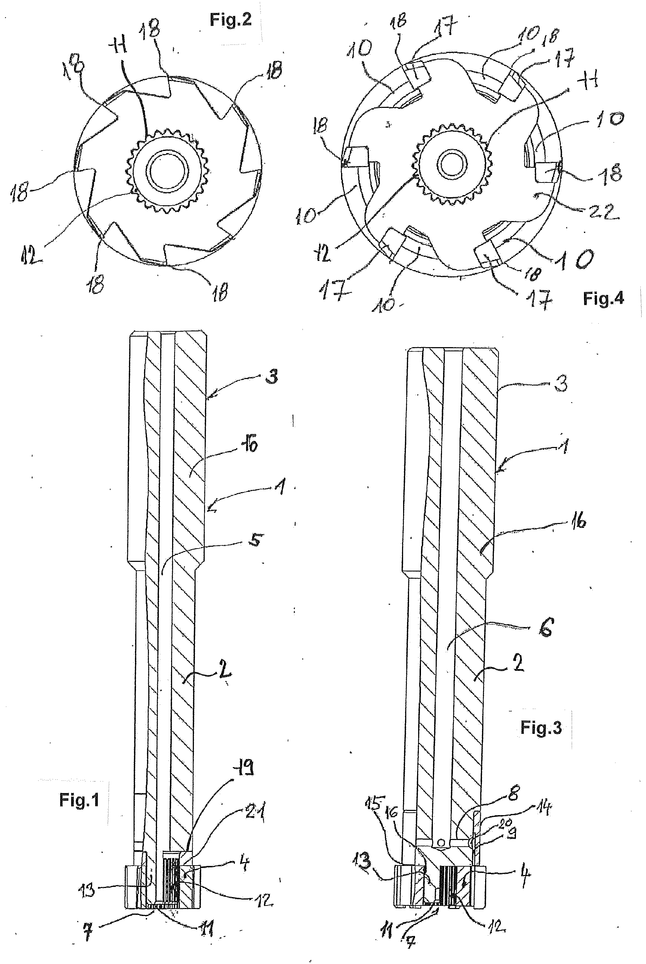

The invention will be further described using drawings, where Fig.1 illustrates the machine reamer according to the invention with monolitic cutting ring designated for machining of cut-off openings, Fig.2 is a front view on the face of the cutting portion of the reamer of Fig.1, Fig.3 illustrates the machine reamer according to the invention with cutting ring from sintered carbide and cutting edges of polycrystalic diamond designated for machining through openings and Fig.4 is a front view on the face of the cutting portion of the reamer of Fig.3.

### Preferred embodiments of the invention

In an example embodiment according to the invention shown in Fig.1 and 2 it is obvious, that the machine reamer 1 consists of a shank 16 with a clamping portion 3, by which the shank 16 is clamped in a not shown spindle of a machine tool and of a supporting portion 2, wherein on the free end of this supporting portion 2 a cutting ring 4 is arranged, which creates the cutting portion of the machine reamer 1. In the center of the shank 16 of the machine reamer 1 there is a through channel 5 for cooling liquid, which is discharged at the face 7 of the cutting portion.

In an alternative embodiment shown in Fig. 3 and 4, in the center of the shank 16 of the machine reamer 1 there is a cut-off channel 6 for cooling liquid, which is discharged from radial channels 8 into the annular space 9 and from this annular space 9 it is discharged into the tooth's grooves 10. Advantageously, on the output of radial channels 8 a conical recess 20 is formed. In the places of outputs of radial channels 8 and conical recesses 20 an appropriate sleeve 14 with inner recess is put on the supporting portion 2, which forms the mentioned annular space 9.

In both embodiments the supporting portion 2 of the shank 16 of the machine reamer 1 is terminated by a centering pin 13, which has a smaller diameter than is the diameter of the supporting portion 2, and due to this a front shoulder 19 is created. The centering pin 13 is provided with a shape profile 12. A corresponding shape profile 11 is then provided also on the inner diameter of the center opening provided in the axe of the cutting ring 4. Shape profiles 11, 12 are provided with a radial clearance, advantageously of 0,05 - 0,1 mm, which is achieved after assembly fulfilled with an adhesive material and after its hardening there is a non-taking apart joint of the cutting ring 4 with the supporting portion 2 of the shank 16 of the machine reamer 1.

Shape profile 12 of the centering pin 13 and also the shape profile 11 in the opening of the cutting ring 4 are advantageously created as longitudinal grooves parallel with the axe of the machine reamer 1 with a peak angle of 90 °-120 ° and with a depth of 0,3 - 0,5 mm.

In case of the embodiment of Fig. 1 and 2, the cutting ring 4 is created as a monobloc of cermet or as a monobloc of sintered carbide or as a monobloc of cutting ceramics.

Advantageously, a distance ring 21 with a cylindrical opening is arranged between a front shoulder 15 of the cutting ring 4 and a front shoulder 19 on the supporting portion 2 of the shank 16 of the machine reamer 1. The distance ring 21 is free arranged on the centering pin 13. This is shown in Fig.1

In case of the embodiment of Fig. 3 and 4, the cutting ring 4 is created from sintered carbide, in the cutting ring 4 tooth's protrusions 22 are created with cutting plates 17 of polycrystalic diamond or cubic bor nitride soldered on and on these cutting plates 17 cutting edges 18 are arranged.

Cutting edges 18 are of polycrystalic diamond or of cubic bor nitride or of cermet.

The whole shank 16 of the machine reamer 1 or at least its supporting portion 2 is made of construction heat treated steel or is made of sintered carbide.

The invention concerns new construction of a machine reamer with cutting edge from progressive cutting materials of cermet, PKD a CBN, which enables substantially lowering of production costs.

The main advantage of the new contruction is that a blank of a cutting ring can be advantageously made by pressing, e.g. from cermet, so it is not necessary to make laborious monolitic reamers from cermet bars.

Another important advantage is that instead of usual hard soldering, joining the cutting portion of the reamer by an adhesive method is used, by which in the glued joint no undesired production influences occur and the production costs are substantially lower.

Another important advantage of the new construction is the possibility to create inner channels for cooling liquid leading to the cutting edges, which is substantially cheaper in a comparison with the electro-erosive machining of openings in cutting materials as it is the case at some constructions of machine reamers especially produced from monolitic cermet bars.

Another advantage of the new construction is that the machine reamer according to the invention can be economically renovated. The cutting ring is heated up to ca. 250° C, the ring is loosen, to the body of the reamer a new blank of the cutting ring is glued and subsequently the cutting portion is machined and the tool is again of 100% function.

By large series production savings of 50% can be achieved concerning the costs in a comparison to the production of new machine reamers.

### Industrial applicability

Machine reamers with cutting edges of progressive cutting materials according to the invention can be used for finish machining of very precise openigs with high speed on all CNC machining tools with inner pressure cooling, above all on full automated machines, which are used by the production of components for cars, aeroplanes, machines used in hospitals, household appliances, machining tools, agriculture machines and by many others mechanical products.

### List of reference signs

- 1: machine reamer
- 2: supporting portion
- 3: clamping portion
- 4: cutting ring
- 5: through channel
- 6: cut-off channel
- 7: face of the cutting portion
- 8: radial channels
- 9: annular space
- 10: tooth's grooves
- 11: shape profile in the opening of the cutting ring
- 12: shape profile ob centering pin
- 13: centering pin
- 14: sleeve
- 15: front shoulder
- 16: shank
- 17: cutting plate
- 18: cutting edge
- 19: front shoulder
- 20: conical recess
- 21: distance ring
- 22: tooth's protrusions

## Claims

1. Machine reamer (1) with cutting edges (18) from progressive cutting materials, comprising shank (16) and a cutting ring (4), the shank (16) being provided with a clamping portion (3), by which the shank (16) can be clamped in a spindle of a machine tool and the shank (16) being provided with a supporting portion (2), wherein in the center of the shank (16) of the machine reamer there is a through-channel (5) for cooling liquid, wherein the supporting portion (2) of the shank (16) is terminated on its free end with a centering pin (13), on the centering pin (13) the cutting ring (4) with a central opening is arranged, wherein on the circumference of the centering pin (13) and also of the opening in the cutting ring (4) shape profiles are provided, with mutually corresponding shapes, wherein the cooling liquid is discharged at the face (7) of the cutting portion of the reamer or alternatively wherein in the center of the shank (16) there is a cut-off channel (6) for cooling liquid, which is discharged from radial channels (8) into an annular space (9) and from this annular space (9) the cooling liquid is discharged into tooth's grooves (10) of the cutting ring (4), **characterized in that** the shape profiles (11,12) of the centering pin (13) and of the opening in the cutting ring (4) are created as longitudinal grooves parallel with the axe of the machine reamer (1) with a peak angle of 90°-120° and with a depth of 0,3 - 0,5 mm and the shape profile (11) of the opening in the cutting ring (4) is arranged on the shape profile (12) of the centering pin (13) with a radial clearance of 0,05 - 0,1 mm filled with an adhesive material for achievement of a non-taking apart joint of the cutting ring (4) with the supporting portion (2) of the shank (16) of the machine reamer (1) after its hardening.

2. Machine reamer according to claim 1, **characterized in, that** the cutting ring (4) is made as a monobloc from cermet.

3. Machine reamer according to claim 1, **characterized in, that** the cutting ring (4) is made as a monobloc from sintered carbide.

4. Machine reamer according to claim 1, **characterized in, that** the cutting ring (4) is made as a monobloc from cutting ceramics.

5. Machine reamer according to claim 1, **characterized in, that** the cutting ring (4) is made as a monolith from sintered carbide, in which tooth's protrusions (22) with cutting edges (18) are made from the group of materials as polycrystalline diamond, cubic boron nitride or cermet.

6. Machine reamer according to claim 1, **characterized in, that** the supporting portion (2) of the shank (16) is made of constructional heat treated steel.

7. Machine reamer according to claim 1, **characterized in, that** the supporting portion (2) of the shank (16) is made of sintered carbide.

8. Machine reamer according to claim 1, **characterized in, that** between a front shoulder (15) of the cutting ring (4) and a front shoulder (19) on the supporting portion (2) of the shank (16) of the machine reamer (1) a distance ring (21) is freely arranged on the centering pin (13).

## Patentansprüche

1. Maschinenreibahle (1) mit Schneidkanten (18) aus progressiven Schneidmaterialien, die einen Schaft (16) mit einem Schneidring (4) beinhaltet, wo der Schaft (16) mit einem Klemmteil (3) versehen ist, durch welcher er in den Antriebsspindel der Bearbeitungsmaschine geklemmt werden kann und der Schaft (16) hat einen Tragteil (2), wobei in der Mitte des Schaftes (16) der Reibahle gibt es ein Durchlaufkanal (5) für Leitung der Kühlflüssigkeit, wobei der Tragteil (2) des Schaftes (16) auf seinem freien Ende mit einem Zentrierungsbolzen (13) beendet ist und auf den Zentrierungsbolzen (13) ist mit seiner Achsenöffnung der Schneidring (4) eingesetzt, wobei auf dem Umfang des Zentrierungsbolzens (13) und auch in der Öffnung des Schneidrings (4) zueinander formschlüssige Formprofile ausgestattet sind, wobei die Kühlflüssigkeit auf dem Stirn des Schneidteiles (7) mündet oder durch die Mitte des Schaftes (16) der Reibahle ein Blindkanal (6) für Leitung der Kühlflüssigkeit durchgefüht ist und die Kühlflüssigkeit dann aus den radialen Kanälen (8) in den Kreisringraum (9) verteilt wird und aus dem Kreisringsraum (9) in die einzelnen Zahnlücken (10) des Schneidrings (4) mündet, **dadurch gekennzeichnet, dass** die Formprofile (11,12) des Zentrierungsbolzens (13) und des Schneidrings (4) als Längsnuten paralell mit der Reibahlenachse mit einem Spitzenwinkel von 90 °-120° und Tiefe von 0,3 - 0,5 mm ausgestattet sind und das Formprofil (11) auf dem Schneidring (4) auf dem Formprofil (12) des Zentrierungsbolzens (13) mit einem radialen Spiel von 0,05 - 0,1 mm angeordnet ist und dieses Spiel ist mit einer Klebemasse zum Erzielen von einer unlösbaren Verbindung des Schneidrings (4) mit dem Tragteil (2) des Schaftes (16) der Reibahle (1) nach ihrer Aushärtung, gefüllt.

2. Maschinenreibahle (1) nach dem Anspruch 1, **dadurch gekennzeichnet, dass** der Schneidring (4) als Monoblock aus Cermet erzeugt ist.

3. Maschinenreibahle (1) nach dem Anspruch 1, **dadurch gekennzeichnet, dass** der Schneidring (4) als Monoblock aus Sinterhartmetall erzeugt ist.

4. Maschinenreibahle (1) nach dem Anspruch 1, **dadurch gekennzeichnet, dass** der Schneidring (4) als Monoblock aus Schneidkeramik erzeugt ist.

5. Maschinenreibahle (1) nach dem Anspruch 1, **dadurch gekennzeichnet, dass** der Schneidring (4) als Monolit aus Sinterhartmetall erzeugt ist, auf dem Zahnansätze (22) mit Schneidkanten (18) aus der Gruppe der Materialien wie Polykrystallin-Diamant, Cubic Bor Nitrid oder Cermet, gebildet sind.

6. Maschinenreibahle (1) nach dem Anspruch 1, **dadurch gekennzeichnet, dass** der Tragteil (2) des Schaftes (16) aus dem veredelten Konstruktionsstahl erzeugt ist.

7. Maschinenreibahle (1) nach dem Anspruch 1, **dadurch gekennzeichnet, dass** der Tragteil (2) des Schaftes (16) aus Sinterhartmetall erzeugt ist.

8. Maschinenreibahle (1) nach dem Anspruch 1, **dadurch gekennzeichnet, dass** zwischen einem Anschlagsstirn (15) des Schneidrings (4) und einem gegenüberliegenden Ansatz (19) auf dem Tragteil (2) des Schaftes (16) der Reibahle (1) auf dem Zentrierungsbolzen (13) ein frei eingelegter begrenzenden Ring (21) angeordnet ist.

## Revendications

1. Alésoir de machine (1) doté de bords de coupe (18) à partir de matériaux de coupe progressive, comprenant une tige (16) et une bague coupante (4), la tige (16) étant pourvue d'une partie de serrage (3) qui peut être serrée dans la broche de la machine-outil et la tige (16) est pourvue d'une partie de support (2), dans lequel au centre de la tige (16) de l'alésoir se trouve un canal traversant (5) pour conduire le liquide de refroidissement, dans lequel la partie de support (2) de la tige (16) est terminée à son extrémité libre par une broche de centrage (13), alors qu'une bague coupante (4) est montée sur la broche de centrage (13) à travers un trou axial, dans lequel sont formés sur la circonférence de la broche de centrage (13) et dans l'ouverture de l'anneau de coupe (4) des profils de forme qui correspondent les uns aux autres en forme, lorsque le liquide de refroidissement s'écoule à l'avant de la partie de coupe (7) ou un canal borgne (6) est formé au centre de la tige d'alésoir (16) pour guider le liquide de refroidissement, qui est distribué des canaux radiaux (8) à l'anneau (9) et de l'anneau (9) aux espaces dentaires individuels (10) de l'anneau de coupe (4), **caractérisé en ce que** les profils de forme (11, 12) de la broche de centrage (13) et de la bague coupante (4) sont formés comme des rainures longitudinales parallèles à l'axe de l'alésoir avec un angle au sommet de 90°-120° avec une profondeur de 0,3 à 0,5 mm et le profil (11) sur la bague de coupe (4) est monté sur le profil (12) de la broche de centrage (13) avec un jeu radial de 0,05 à 0,1 mm rempli d'adhésif pour réaliser une connexion non détachable de la bague de coupe (4) avec le support (2) de la tige (16) de l'alésoir (1) après son durcissement.

2. Alésoir de machine selon la revendication 1, **caractérisé en ce que** la bague coupante (4) est réalisée sous la forme d'un monobloc en cermet.

3. Alésoir de machine selon la revendication 1, **caractérisé en ce que** la bague coupante (4) est réalisée sous la forme d'un monobloc en carbure

4. Alésoir de machine selon la revendication 1, **caractérisé en ce que** la bague coupante (4) est réalisée sous la forme d'un monobloc en céramique de coupe.

5. Alésoir de machine selon la revendication 1, **caractérisé en ce que** la bague coupante (4) est réalisée sous la forme d'un monobloc en carbure , dans lequel des saillies dentaires (22) sont formées avec des arêtes de coupe (18) du groupe de matériaux tels que le diamant polycristallin, le nitrure de bore cubique ou le cermet.

6. Alésoir de machine selon la revendication 1, **caractérisé en ce que** la partie de support (2) de la tige (16) est en acier inoxydable de construction.

7. Alésoir de machine selon la revendication 1, **caractérisé en ce que** la partie de support (2) de la tige (16) est en carbure

8. Alésoir de machine selon la revendication 1, **caractérisé en ce qu'**entre la face de butée (15) de la bague coupante (4) et l'épaulement opposé (19) sur la partie de support (2) de la tige (16) de l'alésoir (1), une bague d'écartement (21) est montée de manière lâche sur l'axe de centrage (13).
